# EUROPEAN PATENT APPLICATION

(11) **EP 4 400 842 A1**
(43) Date of publication of application: **17.07.2024**
(21) Application number: 22864187.4
(22) Date of filing: 08.08.2022
(51) Int. Cl.: G01N 35/00

(54) **AUTOMATIC ANALYSIS DEVICE AND METHOD FOR OPERATING AUTOMATIC ANALYSIS DEVICE**

(30) Priority: 06.09.2021 JP 2021145051
(71) Applicant: HITACHI HIGH-TECH CORPORATION, Tokyo 105-6409 (JP); F. Hoffmann-La Roche AG, 4070 Basel (CH); Roche Diagnostics GmbH, 68305 Mannheim (DE)
(72) Inventor: MIYADA, Yuki, Tokyo 105-6409 (JP); TAKADA, Eiichiro, Tokyo 105-6409 (JP); HAMASAKI, Koshin, Tokyo 105-6409 (JP); JOJI, Akira, Tokyo 105-6409 (JP); FOESTER, Elisabeth, 68305 Mannheim (DE); RUTZ, Christoph, 68305 Mannheim (DE)
(74) Representative: MERH-IP Matias Erny Reichl Hoffmann Patentanwälte PartG mbB
(86) International application number: PCT/JP2022/030211
(87) International publication number: WO 2023/032601

(57) **Abstract**

Provided are an automatic analyzer that can decrease waiting time for a user and reduce running costs as compared with in the past and an operation method for the automatic analyzer. The analyzer includes: a first mechanism group 202 that is used only in analysis for biochemical items; a second mechanism group 203 that is used only in analysis for immunological items; a common mechanism group 204 that is used in analysis for both biochemical items and immunological items; and a control part 116 that activates the second mechanism group 203 and common mechanism group 204 without activating the first mechanism group 202 when analysis for biochemical items is not required, and activates the first mechanism group 202 and common mechanism group 204 without activating the second mechanism group 203 when analysis for immunological items is not required.

## Description

### Technical Field

The present invention relates to an automatic analyzer and an operation method for the automatic analyzer.

### Background Art

In patent document 1, an automatic analyzer is described that has two power-saving mode functions to stop mechanism operation, such as mode 1 in which operation of a cleaning mechanism is stopped during a waiting time in which analysis modules after measurement end do not perform measurement and mode 2 in which a light source lamp is stopped during the waiting time.

### Prior Art Document

### Patent Document

Patent Document 1: JP-2015-129659-A

### Summary of the Invention

### Problem to be Solved by the Invention

According to patent document 1, a consideration is not made about such a problem that, in a composite-type automatic analyzer in which analysis modules are aggregated in one casing and a plurality of analysis item groups can be measured by one device, it is impossible to power off the analysis modules in the case where part of the analysis item groups is necessary even when the other analysis item groups are not measured.

The present invention provides an automatic analyzer that can decrease waiting time for a user and reduce also running costs and an operation method for the automatic analyzer.

### Means for Solving the Problem

The present invention includes a plurality of means for solving the above-described problem. To cite one example thereof, an automatic analyzer is provided that includes a first mechanism that is used only in analysis for a first analysis item group, a second mechanism that is used only in analysis for a second analysis item group, a third mechanism that includes a housing part to house a first reagent required only in analysis for the first analysis item group and a second reagent required only in analysis for the second analysis item group and is used in analysis for both the first analysis item group and the second analysis item group, and a control part that controls the first mechanism, the second mechanism, and the third mechanism so that when analysis for the first analysis item group is not required, the second mechanism and the third mechanism are activated without activating the first mechanism, and when analysis for the second analysis item group is not required, the first mechanism and the third mechanism are activated without activating the second mechanism.

### Advantages of the Invention

According to the present invention, waiting time for a user can be decreased and running costs can also be reduced. Problems, configurations, and effects other than those described above will be made apparent by the following description of an embodiment.

### Brief Description of Drawings

Fig. 1 is a plan view that shows an automatic analyzer.
Fig. 2 is a view that shows a table which stores classification into first mechanisms required only in analysis for a first analysis item group, second mechanisms required only in analysis for a second analysis item group, and third mechanisms required in analysis for the first and second item groups.
Fig. 3A is a flowchart that sets the analysis mechanism status according to the installed reagent.
Fig. 3B is a flowchart that sets the analysis mechanism status according to the mechanism status.
Fig. 3C is a flowchart that decides which mechanism to be activated, according to the analysis mechanism status.
Fig. 4 is an example of a system overview screen showing that the first mechanisms cannot make an analysis.
Fig. 5 is an example of a system overview screen showing that the second mechanisms cannot make an analysis.
Fig. 6 is an example of a reagent overview screen.
Fig. 7 is a matrix diagram that shows analysis mechanism statuses.

### Modes for Carrying Out the Invention

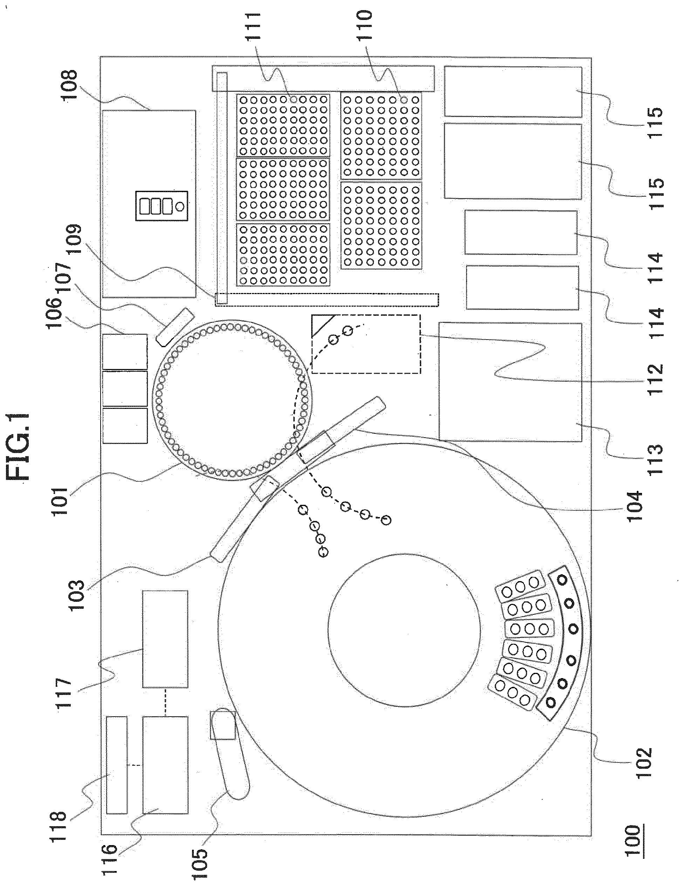

Embodiments of an automatic analyzer and an operation method for the automatic analyzer according to the present invention will be described with use of FIG. 1 to FIG. 7.

In the following embodiments, it goes without saying that constituent elements (including elementary steps and so forth) thereof are not necessarily indispensable except for the case in which an explicit statement is particularly made, the case in which the constituent element is obviously indispensable in principle, and so forth. Furthermore, in the drawings used in the present specification, the same or corresponding constituent elements are given the same or similar numerals and repeated description is omitted regarding these constituent elements in some cases.

First, the overall configuration of an automatic analyzer will be described with use of FIG. 1. FIG. 1 is a diagram schematically illustrating a plan view of the automatic analyzer.

In an automatic analyzer 100 illustrated in FIG. 1, reaction vessels 111 line up on a circumference in an incubator (reaction disk) 101. Common vessels are used in all reactions as the reaction vessels 111 and the reaction vessels 111 are disposable. The incubator 101 is controlled by a drive mechanism such as a motor in such a manner as to be rotationally driven by a distance equivalent to a length of predetermined number of reaction vessels 111 in one cycle.

A plurality of reagent bottles and sample vessels can be placed on a circumference in a reagent/sample common disk 102. In the present example, reagent bottles are located on the inner circumferential side of sample vessels. However, sample vessels may be located on the inner circumferential side of reagent bottles, or a configuration may be employed in which reagent bottles and sample vessels are located without division based on the inner circumferential side and the outer circumferential side.

In the present embodiment, in the reagent/sample common disk 102, first reagents required only in analysis for a first analysis item group (biochemical items) and second reagents required only in analysis for a second analysis item group (immunological items) are housed together in one disk.

A first dispensing mechanism 103 and a second dispensing mechanism 104 that can rotate and vertically move are installed between the incubator 101 and the reagent/sample common disk 102, and each include a dispensing nozzle. The first dispensing mechanism 103 and the second dispensing mechanism 104 are separately used in inspections in different analysis processes. When the first dispensing mechanism 103 is employed as a mechanism for biochemical inspection and the second dispensing mechanism 104 is employed as a mechanism for immunological inspection, the necessity to prevent contamination between samples is high in the second dispensing mechanism 104 for immunological inspection and therefore dispensing is performed with use of a disposable dispensing tip 110 in the second dispensing mechanism 104.

In the first dispensing mechanism 103, a sample and a reagent for biochemical inspection are dispensed. In the second dispensing mechanism 104, a sample and a reagent for immunological inspection are dispensed. Regarding a sample for which measurement is performed for inspections of both biochemical inspection and immunological inspection, the dispensing mechanism makes access and performs dispensing in both the first dispensing mechanism 103 and the second dispensing mechanism 104.

The dispensing nozzle moves while drawing a circular arc around a rotation axis and performs sample dispensing from a sample vessel to a reaction vessel installed in the incubator 101. On the trajectory of the dispensing nozzle, a sample aspiration position and a reagent aspiration position on the reagent/sample common disk 102, a first dispensing position and a second dispensing position on the incubator 101, and a cleaning tank for cleaning the dispensing nozzle exist.

For the second dispensing mechanism 104, a dispensing tip mounting position and a dispensing tip discarding position also exist on the trajectory because the dispensing tip 110 is used.

The first dispensing mechanism 103 and the second dispensing mechanism 104 are disposed in such a manner that physical interference does not occur between the trajectories of the respective dispensing nozzles and between the respective mechanisms. After a sample and a reagent are aspirated by the dispensing nozzle or the dispensing tip mounted on the dispensing nozzle, the sample and the reagent are stirred and mixed in a reaction vessel installed in the incubator 101, by aspiration-discharge operation of the dispensing nozzle or the dispensing tip. The reaction vessel that houses a reacted liquid resulting from the mixing of the sample and the reagent is managed at a predetermined temperature by the incubator 101 and reaction is promoted for a predetermined time.

A reagent stirring mechanism 105 as stirring means is set around the reagent/sample common disk 102. This reagent stirring mechanism 105 moves to an area above the reagent vessel in which a magnetic particle solution that should be stirred is put, and lowers a magnetic particle stirring element of the reagent stirring mechanism 105 to stir the magnetic particle solution by rotating this stirring element. In order to keep magnetic particles in the solution from naturally precipitating, the magnetic particles are stirred immediately before the reagent is dispensed.

A spectrophotometer 107 for biochemical inspection is disposed around the incubator 101. The spectrophotometer 107 includes a light source and a detector (neither is omitted for convenience of illustration) and measures the absorbance of a reacted liquid resulting from mixing of a sample and a reagent, by dispersing and detecting transmitted light obtained through irradiating the reacted liquid with the light source.

Furthermore, the reacted liquid resulting from reaction for a predetermined time by the incubator 101 can be brought to a detection mechanism 108 for immunological inspection by a detector syringe 106 and be measured. In the immunological inspection, there are systems in which electrochemiluminescence or chemiluminescence is employed as the principle as a system that detects a labeled substance. A second liquid container 114, a labeled substance, and the structure and properties of a detection area suitable for each are selected, and the amount of luminescence that derives from luminescence reaction of the labeled substance is measured with use of a photomultiplier tube as the detector.

The reaction vessel about which measurement of the absorbance has been completed in the incubator 101 is discarded into a dispensing tip/reaction vessel discarding box 112 by a dispensing tip/reaction vessel transporting mechanism 109. Movement of the reaction vessel in which the reacted liquid resulting from reaction for a predetermined time by the incubator 101 is put to the detection mechanism 108 and movement of the reaction vessel about which measurement has been completed in the detection mechanism 108 to the dispensing tip/reaction vessel discarding box 112 are also performed by the dispensing tip/reaction vessel transporting mechanism 109.

After completion of measurement, a cleaning liquid container 115 is used in order to clean the first dispensing mechanism 103 or the second dispensing mechanism 104.

A control part 116 is connected to pieces of equipment in the above-described automatic analyzer 100 and controls operation of the respective pieces of equipment and mechanisms in the automatic analyzer 100, such as rotational driving of the incubator 101, rotational operation of the reagent/sample common disk 102, and operations of driving, sample aspiration, and sample discharge of a sample nozzle. In FIG. 1, illustration is made with omission of the connection between the respective mechanisms that configure the automatic analyzer and the control part 116 for simplification of illustration.

The control part 116 is a computer including a CPU and.a memory, and performs computation processing to obtain the concentration of a predetermined component in a sample from a detection result of the spectrophotometer 107 or the detection mechanism 108.

The control of the operation of the respective pieces of equipment by the control part 116 is performed based on various programs recorded in a storage device. In the storage device, various.parameters input through an input device, information on a measurement-target sample (information by sample type, and so forth), measurement results, and so forth are stored besides various programs used for measurement of a sample.

A storage part 117 is connected to the control part 116, and stores information required to control the automatic analyzer 100, the current situation of the automatic analyzer 100, and so forth and affects operation of the control part 116.

The control processing of operation performed in the control part 116 may be marshaled into one program or the respective kinds of control processing may be separated into a plurality of programs, or the control processing may be a combination of them. Moreover, part or all of the programs may be implemented by dedicated hardware or may be modularized.

A display part 118 is display equipment, such as a liquid crystal display, that displays, for an operator, an input screen of various parameters and setting, analysis inspection data of first inspection or re-inspection, a measurement result, and various kinds of information in the automatic analyzer 100, such as reagent information. The display part 118 can be made into a touch panel system that doubles as an input part.

In FIG. 1, description has been made about the form in which reagents and samples are housed in one disk as the reagent/sample common disk. However, it is possible to employ a form in which samples are housed in different dedicated disks. In this case, as dispensing mechanisms, one or more dispensing mechanisms for exclusive use for reagent dispensing and one or more dispensing mechanisms for sample dispensing can be each disposed for exclusive use.

Furthermore, description will be made about the case in which, as analysis item groups, the first analysis item group is biochemical items and the second analysis item group is immunological items. However, the analysis item groups are not limited to this combination and other items such as an electrolyte and blood can be employed as another analysis item group.

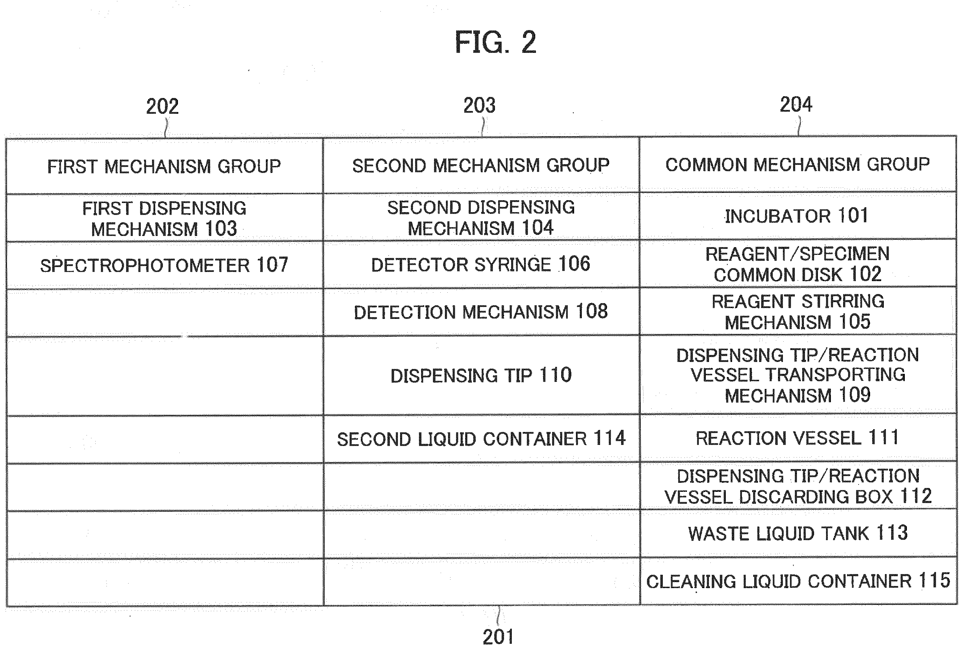

FIG. 2 is a view illustrating a mechanism classification table 201 in which a classification of a first mechanism required only in analysis for the first analysis item group, a second mechanism required only in analysis for the second analysis item group, and a third mechanism required in both analysis for the first analysis item group and analysis for the second analysis item group is stored in the automatic analyzer 100 illustrated in FIG. 1. This table is stored in the storage part 117.

As described above, the first analysis item group is biochemical items and the second analysis.item group is immunological items. Thus, the first mechanism is classified as a mechanism for biochemical items and the second mechanism is classified as a mechanism for immunological items.

In this case, as illustrated in FIG. 2, a first mechanism group 202 is configured by mechanisms used only in analysis for the first analysis item group and is formed from the first dispensing mechanism 103 and the spectrophotometer 107. Besides, for example, there are a syringe for the first dispensing mechanism 103 and so forth.

A second mechanism group 203 is configured by mechanisms used only in analysis for the second analysis item group and is formed from the second dispensing mechanism 104, the detector syringe 106, the detection mechanism 108, the dispensing tip 110, and the second liquid container 114. Besides, for example, there are a syringe for the second dispensing mechanism 104, system reagents, and a system reagent supply system.

A common mechanism group 204 is configured by mechanisms used in analysis for both the first analysis item group and the second analysis item group and is formed from the incubator 101, the reagent/sample common disk 102, the reagent stirring mechanism 105, the dispensing tip/reaction vessel transporting mechanism 109, the reaction vessel 111, the dispensing tip/reaction vessel discarding box 112, a waste liquid tank 113, and the cleaning liquid container 115. Besides, for example, there are system water and a system water supply system.

These first mechanism group 202, second mechanism group 203, and common mechanism group 204 are disposed in the casing of the automatic analyzer 100.

With the classification made in this manner, the control part 116 of the present embodiment activates the second mechanism group 203 and the common mechanism group 204 without activating the first mechanism group 202 when analysis for the biochemical items is not required, and activates the first mechanism group 202 and the common mechanism group 204 without activating the second mechanism group 203 when analysis for the immunological items is not required.

Furthermore, the control part 116 activates only the second mechanism group 203 and the common mechanism group 204 when the first reagent for the biochemical item is not housed in the reagent/sample common disk 102, and activates only the first mechanism group 202 and the common mechanism group 204 when the second reagent for the immunological item is not housed in the reagent/sample common disk 102.

Moreover, the control part 116 activates only the second mechanism group 203 and the common mechanism group 204 when it is decided that an abnormality has occurred in the first mechanism group 202, and activates only the first mechanism group 202 and the common mechanism group 204 when it is decided that an abnormality has occurred in the second mechanism group 203.

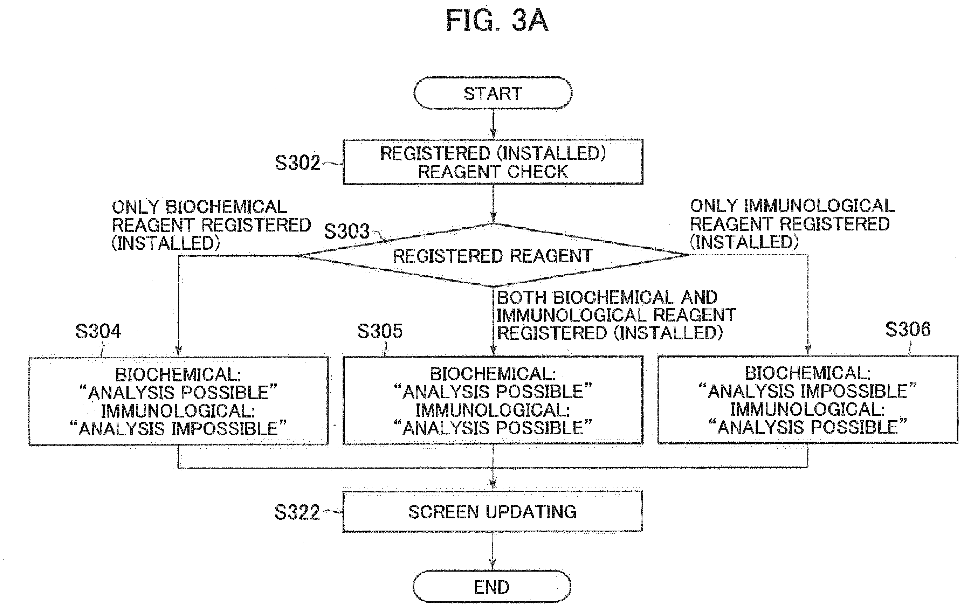

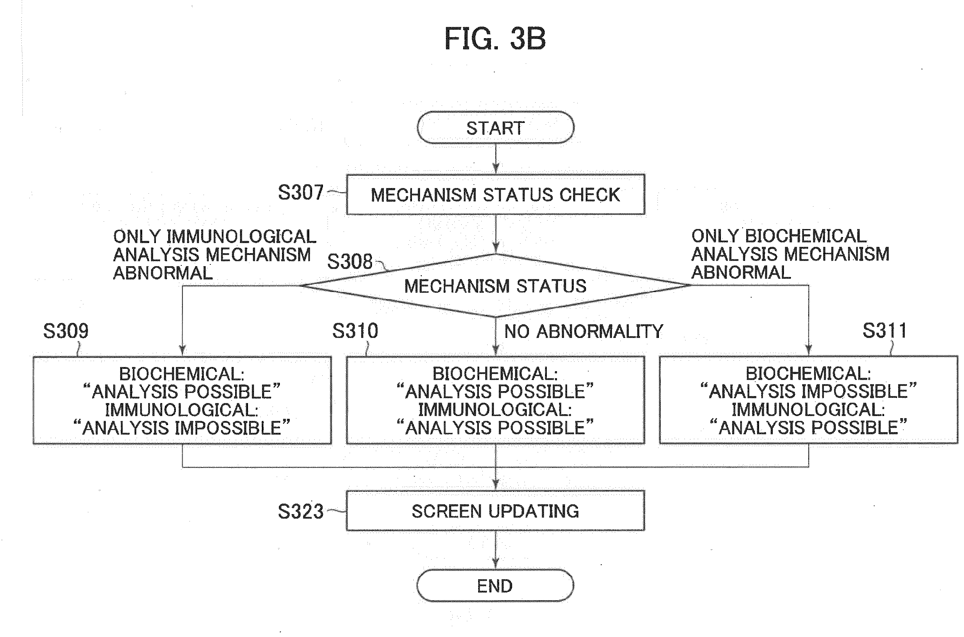

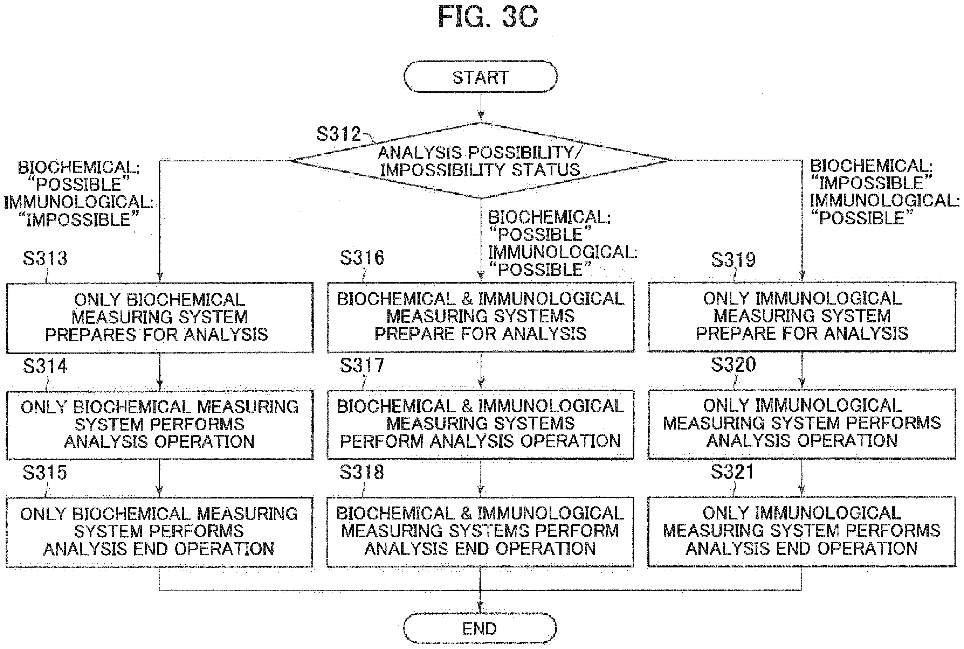

Subsequently, details of these kinds of control will be described with use of FIG. 3A, FIG. 3B, and FIG. 3C. FIG. 3A is a flowchart that sets the analysis mechanism status according to the installed reagent. FIG. 3B is a flowchart that sets the analysis mechanism status according to the mechanism status. FIG. 3C is a flowchart that decides which mechanism to be activated, according to the analysis mechanism status.

FIG. 3A and FIG. 3B to be described below are flowcharts that flow at the time of reagent registration or at the time of occurrence of an abnormality. At the time of analysis request (FIG. 3C), the control part 116 may operate in the classification that has been already determined.

First, FIG. 3A will be described. The control part 116 acquires all pieces of information on the reagents that have been installed in the reagent/sample common disk 102 and been registered, checks the acquired reagent information (step (hereinafter, described as "S") 302), and decides which status of "only biochemical reagent," "both biochemical reagent and immunological reagent," and "only immunological reagent" the installed reagents are in (S303).

When it is decided that the installed reagents are "only biochemical reagent," the control part 116 sets the respective mechanism statuses to "analysis is possible" for the first mechanism group 202 and "analysis is impossible" for the second mechanism group 203 (S304).

Furthermore, when it is decided that the installed reagents are "both biochemical reagent and immunological reagent," the control part 116 sets the respective mechanism statuses to "analysis is possible" for both the first mechanism group 202 and the second mechanism group 203 (S305).

Moreover, when it is decided that the installed reagents are "only immunological reagent," the control part 116 sets the respective mechanism statuses to "analysis is impossible" for the first mechanism group 202 and "analysis is possible" for the second mechanism group 203 (S306).

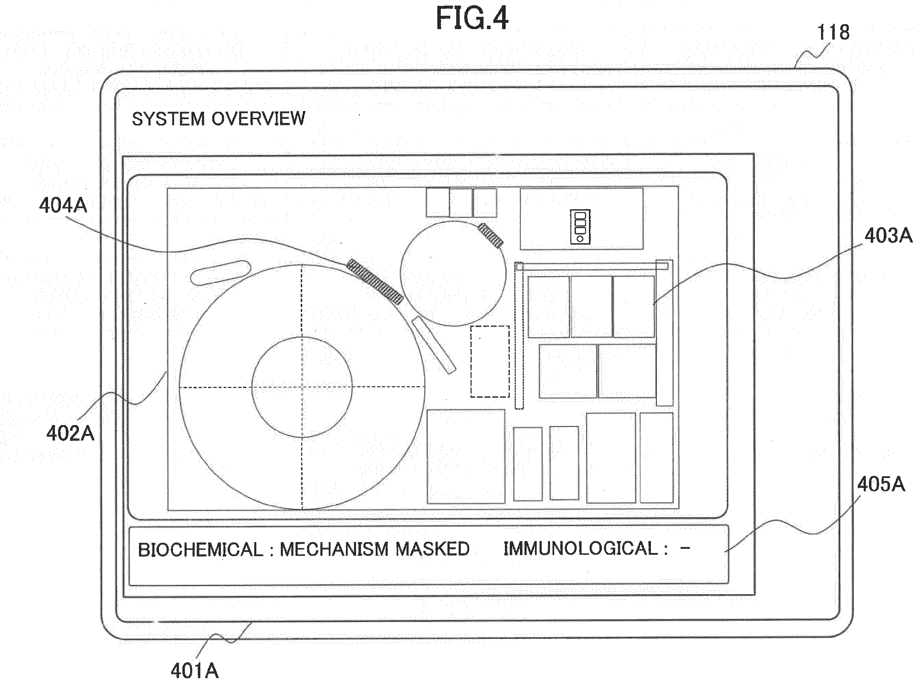

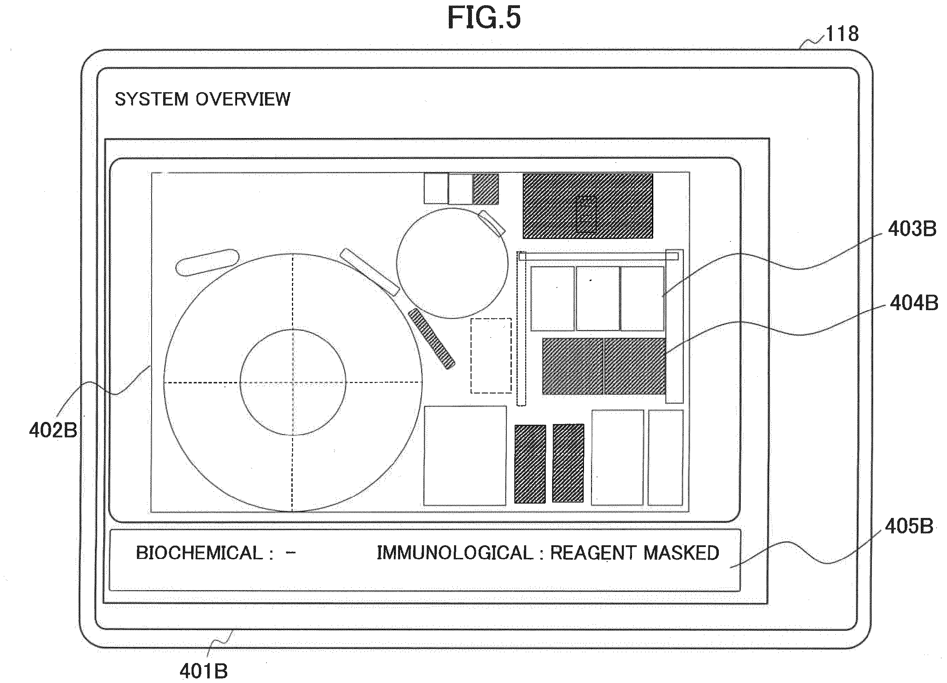

After the mechanism statuses are determined, the mechanism statuses displayed on a system overview screen like ones illustrated in FIG. 4 and FIG. 5, for example, are updated (S322).

Next, FIG. 3B will be described. The flow of FIG. 3B may be performed after the flow of FIG. 3A continuously or may be performed at a different timing from it. The control part 116 acquires all pieces of information on the status of the first mechanism group 202, the second mechanism group 203, and the common mechanism group 204 (S307), and decides which of "abnormality exists only in first mechanism group 202," "abnormality exists only in second mechanism group 203," and "mechanism abnormality does not exist" the status of the first mechanism group 202 and the second mechanism group 203 is (S308).

For example, in the second mechanism group 203, a performance check of the detection mechanism 108 is performed at the time of analysis preparation operation and, when an abnormality exists in the temperature, a signal value, or the like, the control part 116 sets the status of the second mechanism group 203 to the status in which analysis is impossible (S309). Furthermore, the control part 116 sets the status of the second mechanism group 203 to the status in which analysis is impossible also when a pressure abnormality or sensor abnormality is sensed in the second dispensing mechanism 104 or the detector syringe 106. Besides, also when insufficiency of the capacity of the dispensing tip 110 or the second liquid container 114 has occurred, the status of the second mechanism group 203 is set to the status in which analysis is impossible (S309). In these occasions, the control part 116 sets the first mechanism group 202 to "analysis is possible."

Moreover, when an abnormality has occurred in neither mechanism, the status of the first mechanism group 202 and the status of the second mechanism group 203 are set to the status in which analysis is possible (S310).

On the other hand, for example, in the first mechanism group 202, a performance check of the spectrophotometer 107 is performed at the time of analysis preparation operation and, when an abnormality exists in the temperature, a signal value, or the like, the control part 116 sets the status of the first mechanism group 202 to the status in which analysis is impossible (S311). Furthermore, also when a pressure abnormality or sensor abnormality is sensed in the first dispensing mechanism 103, the control part 116 sets the status of the first mechanism group 202 to the status in which analysis is impossible (S311). In these occasions, the control part 116 sets the second mechanism group 203 to "analysis is possible."

After the mechanism statuses are determined, the mechanism statuses displayed on the system overview screen like those illustrated in FIG. 4 and FIG. 5, for example, are updated (S323).

At this time, "analysis is impossible" decided in the check of the mechanism status (S308) and "analysis is impossible" decided in the check of the.installed.and registered reagents S303) are discriminated from each other. In the case of "analysis is impossible" based on the former, for example, "mechanism masked" is displayed on the system overview screen. In the case of "analysis is impossible" based on the latter, "reagent masked" is displayed. When the situation applies to both, "mechanism masked" is preferentially displayed. An example in which "mechanism masked" is displayed is illustrated in FIG. 4. An example in which "reagent masked" is displayed is illustrated in FIG. 5.

Next, FIG. 3C will be described. The flow of FIG. 3C may be performed after the flow of FIG. 3B continuously or may be performed at a different timing from it. The control part 116 checks the analysis possibility/impossibility status and decides which of "analysis is possible" and "analysis is impossible" the first mechanism group 202 and the second mechanism group 203 are set to (S312).

When it is decided that "analysis is possible" regarding the first mechanism group 202 and "analysis is impossible" regarding the second mechanism group 203, the control part 116 performs the analysis preparation operation only in the biochemical measuring system (first mechanism group 202 + common mechanism group 204) (S313), performs analysis operation only in the biochemical measuring system (S314), and performs analysis end operation only in the biochemical measurement system (S315) to end the operation.

Furthermore, when it is decided that "analysis is possible" regarding both the first mechanism group 202 and the second mechanism group 203, the control part 116 performs the analysis preparation operation in the biochemical and immunological measuring systems (first mechanism group 202 + second mechanism group 203 + common mechanism group 204) (S316), performs the analysis operation in the biobiochemical and immunological measuring systems (S317), and performs the analysis end operation in the biochemical and immunological measuring systems (S318) to end the operation.

Moreover, when it is decided that "analysis is impossible" regarding the first mechanism group 202 and "analysis is possible" regarding the second mechanism group 203, the control part 116 performs the analysis preparation operation only in the immunological measuring system (second mechanism group 203 + common mechanism group 204) (S319), performs the analysis operation only in the immunological measuring system (S320), and performs the analysis end operation only in the immunological measurement system (S321) to end the operation.

When an abnormality has occurred in the first mechanism group or the second mechanism group in the middle of performing of the analysis operation, the first mechanism group or the second mechanism group is recognized as the status in which analysis is impossible. Analysis items to be measured by the mechanism that has become the status in which analysis is impossible are skipped and analysis is continued regarding analysis items to be measured by the mechanism that is still capable of analysis. Stop of the analysis can be avoided as much as possible and measurement of measurable items can be continued.

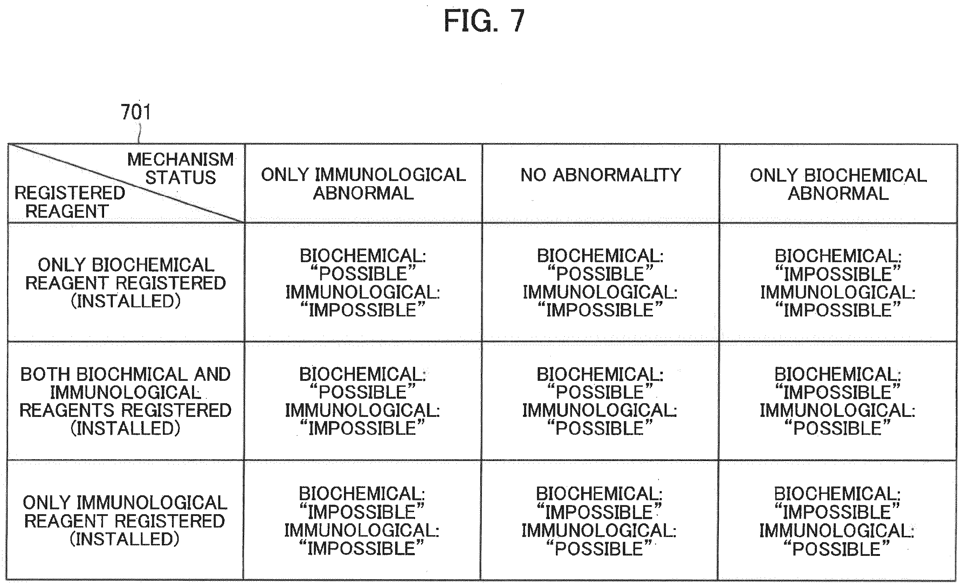

The analysis possibility/impossibility status is acquired from a matrix diagram illustrated in FIG. 7. The analysis possibility/impossibility status is determined from both statuses of the mechanism status and the registered reagent status. The mechanism status is acquired by the flow of FIG. 3B and the registered reagent status is acquired by the flow of FIG. 3A. The control part 116 obeys the respective statuses at the timing of operation.

When it is decided that a biochemical or immunological reagent is not installed based on the information on the installed reagents or when the biochemical or immunological mechanism is incapable of analysis due to the occurrence status of trouble with the mechanism, analysis for the corresponding analysis item group is unnecessary (impossible), and therefore the corresponding mechanism group is masked. Due to this, performing of the analysis preparation operation and the analysis end operation that are unnecessary is avoided and it becomes possible to decrease waiting time for the user and reduce also running costs due to generated water, power, and so forth.

Only either one of the processing of the check of the registered reagents (S302 to S306) and the processing of the check of the mechanism status (S307 to S311) may be performed.

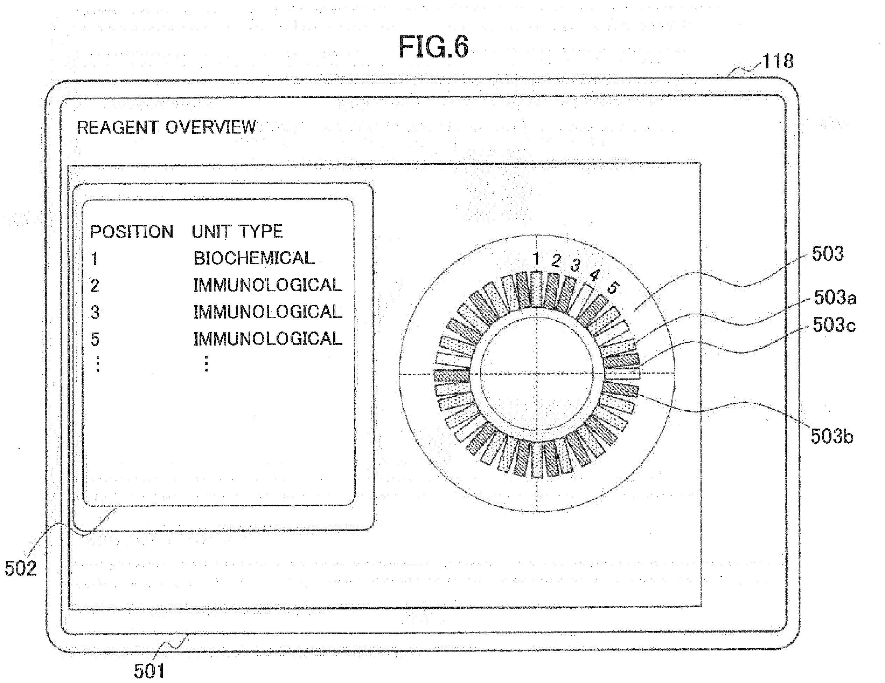

Subsequently, description will be made with use of FIG. 4 to FIG. 6 regarding details of a display screen suitably displayed by the display part 118 in order to check the status of the first mechanism group 202, the second mechanism group 203, and the common mechanism group 204. FIG. 4 and FIG. 5 are examples of the system overview screen of the automatic analyzer. FIG. 6 is an example of a reagent overview screen of the automatic analyzer.

It is desirable that the timing when the screen of FIG. 4 to FIG. 6 is displayed is set to a timing after S309, S310, or S311 in FIG. 3B and timings before and after S312. However, the timing is not limited thereto.

Preferably, after S309, S310, or S311 in FIG. 3B and timings before and after S312, the control part 116 causes the display part 118 to display a system overview screen 401A showing whether or not to activate the first mechanism group 202 or a system overview screen 401B showing whether or not to activate the second mechanism group 203.

In the system overview screen 401A illustrated in FIG. 4 and the system overview screen 401B illustrated in FIG. 5, mechanism view screens 402A and 402B, respectively, are displayed, and mechanisms 403A and 403B capable of analysis and mechanisms 404A and 404B incapable of analysis are each displayed. The mechanisms 403A and 403B capable of analysis and the mechanisms 404A and 404B incapable of analysis are displayed in such a manner as to be allowed to be discriminated. For example, in the case of the present embodiment, the mechanisms 404A and 404B incapable of analysis are displayed with oblique lines and are displayed differently from normal display like that of the mechanisms 403A and 403B capable of analysis.

The system status of the first mechanism group 202 and the second mechanism group 203 is displayed in the respective mechanism status display screens 405A and 405B, respectively, and the user can discriminate whether analysis for the first analysis item group or the second analysis item group can be performed.

Moreover, the control part 116 can cause the display part 118 to display a reagent overview screen 501 to check whether the first reagent and the second reagent have been installed in the reagent/sample common disk 102 or not, preferably during the flow of FIG. 3A and the flow of FIG. 3B.

In the reagent overview screen 501 illustrated in FIG. 6, a list screen 502 of reagent bottles installed in the reagent/sample common disk 102 and a reagent bottle status 503 are displayed.

Furthermore, in the reagent bottle list screen 502, which analysis item of the biochemical item and the immunological item the installed reagent bottle is to be used for is displayed.

Similarly, also in the reagent bottle status 503, which of a biochemical item reagent bottle 503a (first reagent), an immuno-biochemical item reagent bottle 503b (second reagent), and a position 503c without an installed reagent bottle the installed reagent bottle corresponds to is displayed in such a manner as to be understood at a glance.

Next, effects of the present embodiment will be described.

The automatic analyzer 100 of the above-described present embodiment includes the first mechanism group 202 used only in analysis for the biochemical items, the second mechanism group 203 used only in analysis for the immunological items, the common mechanism group 204 used in analysis for both the biochemical items and the immunological items, and the control part 116 that activates the second mechanism group 203 and the common mechanism group 204 without activating the first mechanism group 202 when analysis for the biochemical items is not required, and activates the first mechanism group 202 and the common mechanism group 204 without activating the second mechanism group 203 when analysis for the immunological items is not required.

Due to this, in the composite-type automatic analyzer 100 that can measure a plurality of analysis item groups by one device, even when a request is made regarding only one analysis item group, waiting time for the user caused for waiting for the end of the analysis preparation operation of the other analysis mechanism that does not perform measurement can be decreased and running costs due to water, power, and so forth generated for performing the analysis preparation operation of the other analysis mechanism that does not perform measurement can also be reduced. In addition, using unnecessary consumables for performing the analysis preparation operation of the other analysis mechanism that does not perform measurement is avoided.

Furthermore, the control part 116 activates only the second mechanism group 203 and the common mechanism group 204 when the first reagent is not housed in the reagent/sample common disk 102, and activates only the first mechanism group 202 and the common mechanism group 204 when the second reagent is not housed in the reagent/sample common disk 102. Therefore, the need to wait for the end of the analysis preparation operation of the other analysis mechanism incapable of measurement is eliminated and it becomes possible to intend reduction in waiting time and reduction in running costs more surely.

Moreover, the control part 116 activates only the second mechanism group 203 and the common mechanism group 204 when it is decided that an abnormality has occurred in the first mechanism group 202, and activates only the first mechanism group 202 and the common mechanism group 204 when it is decided that an abnormality has occurred in the second mechanism group 203. This also eliminates the need to wait for the end of the analysis preparation operation of the other analysis mechanism incapable of measurement and reduction in waiting time and reduction in running costs can be intended more surely.

Furthermore, the automatic analyzer 100 further includes the display part 118 that generates various displays for the operator of the automatic analyzer, and the control part 116 causes the display part 118 to display the system overview screen 401A or 401B showing whether or not to activate the first mechanism group 202 or whether or not to activate the second mechanism group 203. Due to this, which mechanism involves trouble that makes analysis impossible can be rapidly understood and thus coping can be rapidly performed. Therefore, reduction in the total time required until analysis completion can be achieved.

Moreover, the automatic analyzer 100 further includes the display part 118 that generates various displays for the operator of the automatic analyzer, and the control part 116 causes display of the reagent overview screen 501 to check whether the first reagent and the second reagent have been installed in the reagent/sample common disk 102. This allows discrimination of whether the installed reagents are "only biochemical reagent," "both biochemical reagent and immunological reagent," or "only immunological reagent," and it becomes easier to perform such coping as reagent input according to need.

### <Others>

The present invention is not limited to the above-described embodiment and allows various modifications and applications. The above-described embodiment is described in detail in order to explain the present invention in an easy-to-understand manner and is not necessarily limited to that including all configurations described.

### List of Reference Signs

100 automatic analyzer
101 incubator (third mechanism)
102 reagent/specimen common disk (housing part, third mechanism)
103: first dispensing mechanism (first mechanism)
104: second dispensing mechanism (second mechanism)
105: reagent stirring mechanism (third mechanism)
106: detector syringe (second mechanism)
107: spectrophotometer (first mechanism)
108: detection mechanism (second mechanism)
109: dispensing tip/reaction vessel transporting mechanism (third mechanism)
110: dispensing tip (second mechanism)
111: reaction vessel (third mechanism)
112: dispensing tip/reaction vessel discarding box (third mechanism)
113: waste liquid tank (third mechanism)
114: second liquid container (second mechanism)
115: cleaning liquid container
116: control part
117: storage part
118: display part
201: mechanism classification table
202: first mechanism group (first mechanisms)
203: second mechanism group (second mechanisms)
204: common mechanism group (third mechanisms)
401A, 401B: system overview screen
402A, 402B: mechanism view screen
403A, 403B: mechanism capable of analysis
404A, 404B: mechanism incapable of analysis
405A, 405B: mechanism status display screen
501: reagent overview screen
502: reagent bottle list screen
503: reagent bottle status
503a: biochemical item reagent bottle (first reagent)
503b: immuno-biochemical item reagent bottle (second reagent)
503c: position without an installed reagent bottle

## Claims

1. An automatic analyzer comprising:
a first mechanism that is used only in analysis for a first analysis item group;
a second mechanism that is used only in analysis for a second analysis item group;
a third mechanism that includes a housing part to house a first reagent required only in analysis for the first analysis item group and a second reagent required only in analysis for the second analysis item group and is used in analysis for both the first analysis item group and the second analysis item group; and
a control part that controls the first mechanism, the second mechanism, and the third mechanism so that when analysis for the first analysis item group is not required, the second mechanism and the third mechanism are activated without activating the first mechanism, and when analysis for the second analysis item group is not required, the first mechanism and the third mechanism are activated without activating the second mechanism.

2. The automatic analyzer according to Claim 1, wherein
the control part
activates only the second mechanism and the third mechanism when the first reagent is not housed in the housing part, and
activates only the first mechanism and the third mechanism when the second reagent is not housed in the housing part.

3. The automatic analyzer according to Claim 1, wherein
the control part
activates only the second mechanism and the third mechanism when it is decided that an abnormality has occurred in the first mechanism, and
activates only the first mechanism and the third mechanism when it is decided that an abnormality has occurred in the second mechanism.

4. The automatic analyzer according to Claim 1, wherein
the first analysis item group is biochemical items, and
the second analysis item group is immunological items.

5. The automatic analyzer according to Claim 1, further comprising:
a display part that generates various displays for an operator of the automatic analyzer, wherein
the control part causes the display part to display a screen showing whether or not to activate the first mechanism or whether or not to activate the second mechanism.

6. The automatic analyzer according to Claim 1, further comprising:
a display part that generates various displays for an operator of the automatic analyzer, wherein
the control part causes display of a screen to check whether the first reagent and the second reagent have been installed in the housing part or not.

7. The automatic analyzer according to Claim 1, wherein
the first mechanism, the second mechanism, and the third mechanism are placed in a casing.

8. An operation method for an automatic analyzer comprising: a first mechanism that is used only in analysis for a first analysis item group; a second mechanism that is used only in analysis for a second analysis item group; a third mechanism that includes a housing part to house a first reagent required only in analysis for the first analysis item group and a second reagent required only in analysis for the second analysis item group and is used in analysis for both the first analysis item group and the second analysis item group, wherein
when analysis for the first analysis item group is not required, only the second mechanism and the third mechanism are activated without activating-the first mechanism, and
when analysis for the second analysis item group is not required, only the first mechanism and the third mechanism are activated without activating the second, mechanism.
